# EUROPEAN PATENT APPLICATION

(11) **EP 4 592 846 A1**
(43) Date of publication of application: **30.07.2025**
(21) Application number: 25152418.7
(22) Date of filing: 17.01.2025
(51) Int. Cl.: G06F 9/54, G06T 1/20, H04L 67/131

(54) **STATE SYNCHRONIZATION FOR SPLIT RENDERING**

(30) Priority: 23.01.2024 PK 462024
(71) Applicant: Nokia Technologies Oy, 02610 Espoo (FI)
(72) Inventor: ILLAHI, Gazi Karam, 02610 Espoo (FI); GÜL, Serhan, 10437 Berlin (DE); AHSAN, Saba, Espoo (FI); CURCIO, Igor Danilo Diego, Gravina di Catania (IT)
(74) Representative: Nokia EPO representatives

(57) **Abstract**

A method of synchronising the state between a spilt rendering server (SRS) in a 3GPP (5G) network and one or more split rendering clients (SRCs) each executing a graphics application. The method has the steps of establishing a split rendering session including provisioning of split rendering resources in the network; acquiring application information by an SRC from an (authorized) Application Provider (AP); exchanging scene information between the AP, SRC and SRS; configuring the split rendering session; negotiating meta-data, rendered media and associated formats between the SRS and SRC; and establishing media and meta-data transport channels. The method further includes negotiating synchronisation states between the SRS and each SRC; sending, by the SRC of rendering metadata to the SRS; sending, by the SRC of state synchronization information to the SRS; sending, from the SRS to the SRC, rendered media based at least partially on the rendering meta-data; and sending state synchronization information from the SRS to the SRC.

## Description

### Field

The invention relates to split rendering and, in particular, to split rendering mapping extended reality (XR) media to 3GPP (5G) networks.

The invention has been developed primarily for mobile computer gaming applications and will be described hereinafter with reference to this application. However, it will be appreciated the invention is not limited to this particular field of use and is applicable to other multimedia.

### Background

It is well known that graphics rendering is compute, render and power intensive especially for immersive applications like virtual reality, augmented reality, mixed reality etc. (collectively extended reality or XR) which require high quality graphics for a reasonable user experience. Resource constrained devices like smartphones and head-mounted displays may not have the capacity to provide high quality XR experiences due to limitations of device compute, render and energy resources.

Split rendering (SR) can be a potential solution to this issue, where the rendering workload is divided between two or more devices, for example, a split rendering client (SRC) such as a mobile device and a split rendering server (SRS). The SRS may have substantially more resources for performing the rendering and other operations and the SRS and SRC exchange meta-data and media with each other. The SRS receives metadata from the SRC and performs rendering operations based on the received metadata and then transmits rendered media to back the SRC which composes the received media with locally rendered media into a frame and displays the frame to a user. In a simplistic case of split rendering, the SRC only does the compositing and possibly reprojection of the media received from the SRS without rendering any media locally.

Computationally rendering content, especially real time 3D content, requires that the computing apparatus is provided information, in a compatible form, about what objects to render and how to render them. Further, the apparatus may need information about how the objects interact with each other or how they evolve over time or how they react to user input, for example. The objects to be possibly rendered may be conceptualized as existing in a virtual scene with the graphics to be rendered being captured by one or more virtual cameras.

The information required may be provided to a computing apparatus in the form of application logic, and description of objects in the (2D/3D) scene, for example, as a scene graph or scene description. The application logic may, non-exhaustively, provide information about: how the objects in a scene interact with each other, react to user input, evolve over time and interact with light, how colors in the scene mix and behave etc; how the scene is viewed, e.g., number of cameras, camera properties, projection etc.; what physics or game engine to use; and what rules they may be subjected to. A scene description or a scene graph resource may, non-exhaustively, provide information about relative location, orientation, and size of the objects in the scene being described; how objects are built, e.g., from 3D models, geometric primitives etc; how assets like sprites and textures are mapped to the objects; and light sources in the scene.

The information listed above is non-exhaustive where the division into application data and scene description is for exposition and illustrative only, however the two groups may be overlapping, not discernible from each other, and some or all the information needed for rendering may be provided in a different manner. Further information, like simulated physics, rendering pipeline to use etc., may be provided. Typically, the 3D scene is represented as a (hierarchical) scene graph in a format that the rendering apparatus understands.

To facilitate computation and execution of application logic, graphics applications may leverage finite state machines (FSMs) where complex behaviors are defined into states comprising a list of states, initial state, transitions between states and inputs or triggers which cause a transition from one state to another state. At any given time, the finite state machine may be in only one of the defined states. Objects in a computer graphics scene of an application may have a finite state machine attached to them, enabling the object to be in one of a finite set of defined states. A transition between these states may be triggered by, for example, user input, time, proximity to another object, collision with another object or some parameter defined by the game logic. There may also be higher level finite state machines, keeping track of various states like game progress, (playing or non-playing) character "health", completion level etc. Popular game development platforms like Unreal, Unity and Godot are known to offer support for FSMs.

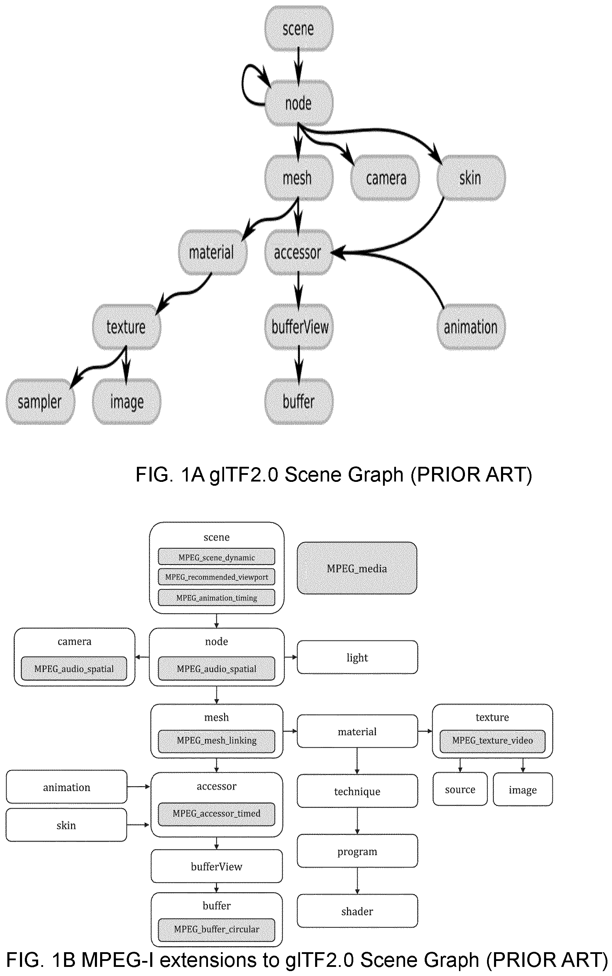

An exemplary method of providing a scene description to a rendering entity is by using MPEG-I Scene Description (ISO/IEC 23090-14). This standard provides a standardized means for distribution of information about a real time immersive scene and the content therein. This standard defines extensions to gITF2.0 which itself is a standardized format for distribution of 3D scenes, assets and models. The core capability of gITF2.0 allows description of a scene graph in an interoperable and extensible fashion as a JSON file which comprises a hierarchy of nodes representing the scene graph. A node may define an object with attributes like transformations, accessors to meshes, textures, other nodes, references to other resources, etc. The extensions defined by MPEG allow gITF2.0 to reference immersive multimedia content which may be timed, dynamic textures, dynamic scene updates, etc. FIG. 1A, shows an example gITF2.0 top level scene graph, where FIG. 1B shows the MPEG-I extensions to the gITF2.0 scene graphs.

In a JSON file describing a gITF2.0/MPEG-I scene description-based scene, the objects in a scene can be identified by their index values in the scene graph or by their "name" property. Additional information can be defined for each node as an application specific "extra" property. This can be used to associate a finite state machine with the object. An object in a gLTF2.0 scene graph may have an animation property associated with it, in which animation related data like animation channels, samplers, timestamps, output values and interpolation algorithm may comprise a finite state machine. The following provides an example gITF representation of a scene in JSON, adapted from gITF tutorials at https://github.com/KhronosGroup/glTF-Tutorials/blob/master/gltfTutorial/gltfTutorial_003_MinimalGltfFile.md:

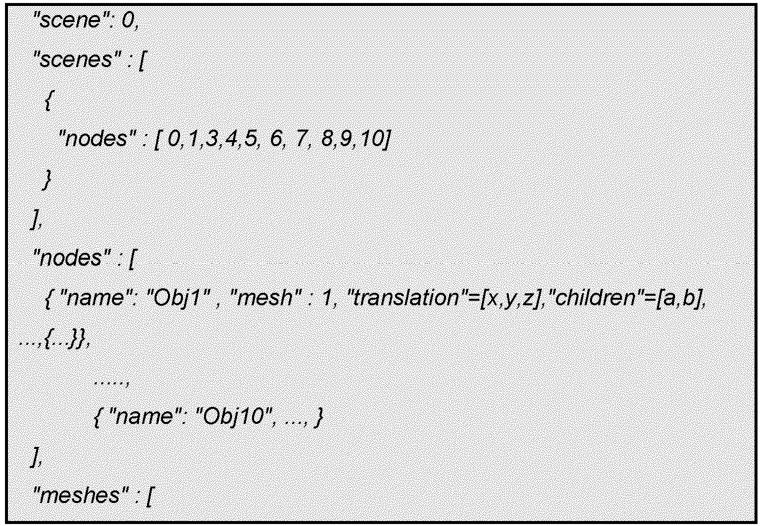

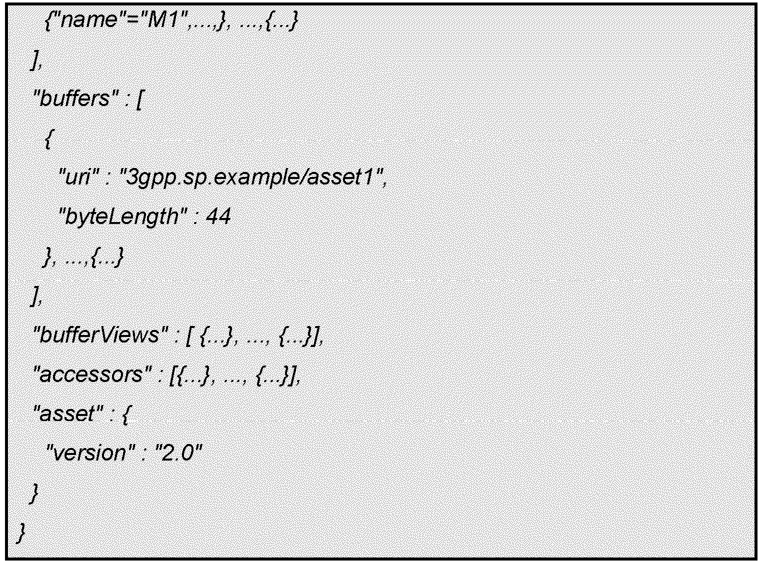

Once the scene information is available to a rendering entity, the rendering process for a given frame may conceptually be divided into three main stages: Application stage, where the scene and objects therein undergo transformations based on application logic; Geometry stage, where the mesh data comprising objects in the scene is subjected to various geometric transforms to obtain a subset of vertices which fall within the view frustum of the rendering camera and finally; Rasterization stage, where the pixels in a framebuffer to be displayed are filled based on the vertices from the geometry stage and associated information like color (e.g. form textures, sprites), illumination, depth from camera near plane etc.

This is just one example rendering process, various other rendering processes exist, such as ray-tracing based rendering, point cloud based rendering, image based rendering. The stages of rendering enumerated here, and the operations discussed are non-exhaustive and may be carried out in various configurations and sequences. Rendering typically occurs multiple times in a second in the so called rendering loop. In addition, a main or application loop may execute the application logic wherein elements of the application like user interaction, experience/game logic, physics, animation etc.

During the course of main loop execution, inputs or events which trigger state transitions a state machine used in the application may occur. On reception of such an input, the application logic actuates the desired transition and sets the finite state machine in the target state. During an iteration of the main loop, the application actuates such transitions for all finite state machines for which transition triggering inputs are received. In practice, for a scene description or scene graph, finite state machines (FSM) may be associated with nodes at different depths of the graph, which keep track of the application at different granularities. There may be finite state machines associated with the root nodes which store the scene level state, FSMs associated with other nodes may store the state of that node and the corresponding child nodes. An individual object may have an associated animation FSM which represents the state of a predefined animation scheme for the object. Furthermore, above the scene graph level, the application may comprise FSMs to maintain an application level state.

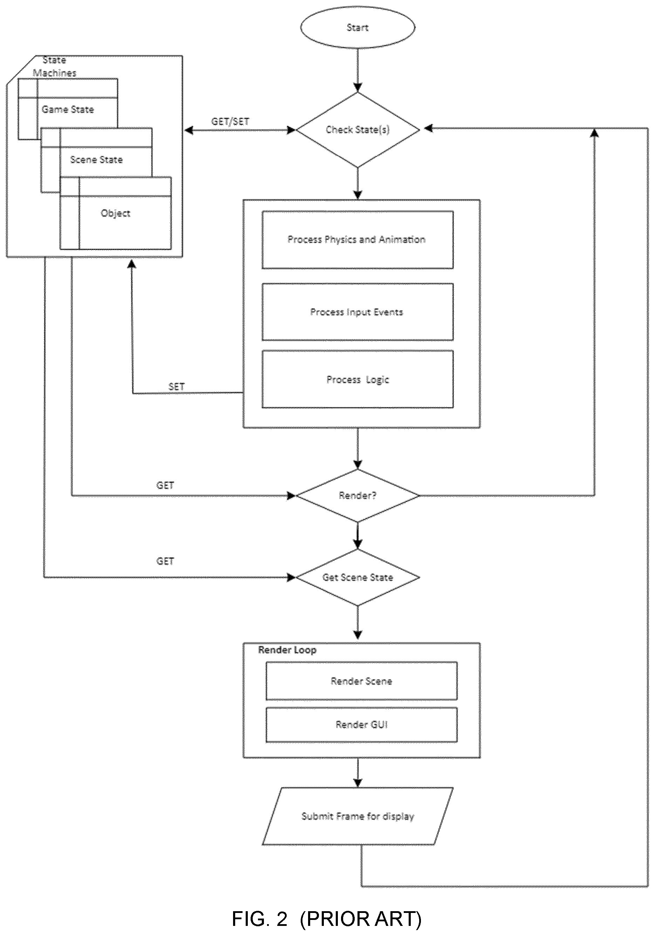

It should be noted that one or more of the render-loop and the main loop or a subloop, for example, a physics loop may be executing asynchronously with respect to each other. Consequently, state updates may happen at a different/faster rate than frame updates. FIG. 2 Illustrates an example main loop and render loop of a video game with example state machines at game level, scene level and object level.

Computer graphics applications, like video games and XR applications are stateful systems and tracking the state of this system, scenes, objects, entities and object groups in a computer graphics application usually have FSMs associated with them. The states are transitioned as and when triggers defined for the transitions occur. These triggers may comprise different predefined events occurring during the application logic, experience (e.g., a game) logic, main loop, frame or rendering loop as illustrated in FIG. 2. Some of these events may depend on user input and interaction, such as, mouse or joystick movement or mouse/key/joystick press, HMD pose change, controller movements, inputs and actions etc. Depending on the application, these inputs may trigger state transitions in various FSMs associated with the application. However, there may be other states, FSMs and transition trigger inputs needed to maintain and track the state of the application. These include, for example, the states of non-playing/Al (controlled) characters in a video game/XR experience, state of other participants of an XR experience, gameplay completion state, playing character status, animation state of an object, interaction state of interactable objects in a scene and such.

Split rendering has been envisioned to be available in 5G networks. The use case and possible high level architecture is defined in clause 6.2.5 of TR 26.928 which maps XR to 5G. 3GPP SA4 is considering split rendering as a service in many work and study items like MeCAR (Permanent Document and TS 26.119), FS_SmartAR(TR 26.806), FS_XRTraffic (TR 26.926). Two ongoing work items in 3GPP SA4 working group specifically define split rendering (SR) architectures in 5G. These work items (Wls) are Split Rendering Media Service Enabler (SR_MSE) and IMS based conversational services (IBACS). In SR_MSE (TS 26.565 v1) a general-purpose split rendering media service enabler based on 5G system is being developed and in IBACS (Permanent Document v0.6 and TS 26.264 v0.3) IMS based split rendering services and architectures are being developed specifically for conversational AR calls. Both WIs define an SRS (residing in the 5G network) and a SRC residing in the UE.

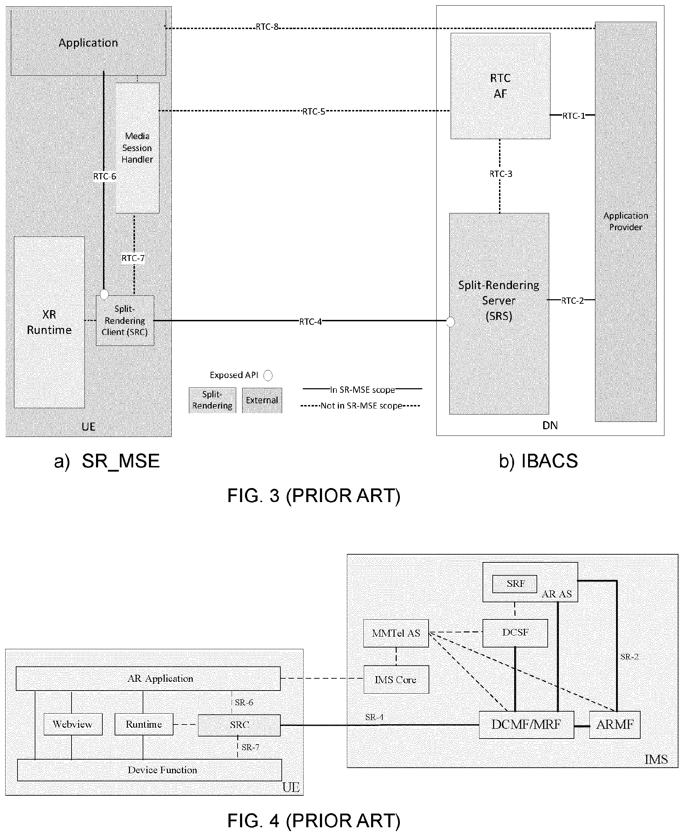

In SR_MSE, the SRS is defined as 5G media function residing in a 5G edge server which is responsible for negotiation of an SR session with an SRC, monitoring edge server resource usage and managing/running the split rendering process. The architecture is illustrated in Figure 3. In IBACS, the SRS is actuated as an AR Media Function (ARMF) and is envisioned as an IMS based Media Function (MF) or a Media Resource Function (MRF) that has AR media processing capabilities. The architecture is illustrated in Figure 4. However, in both architectures Split Rendering can be conceptualized as being performed by an SRC inside a UE and an SRS residing inside the 5G network.

FIG. 3 shows the Split Rendering Architecture SR_MSE and is described per TS 26.565 v1 as:
*1. The* 5G *Application Providers (AP) provisions the split-rendering through RTC-1.*
*2. In the use cases in which the AP is involved in the media delivery, the RTC-2 interface is used for this purpose.*
*3.The communication between AF and SRS is through RTC-3. This interface may for instance include the EDGE-3 interface.*
*4. The signaling* as *well* as *the media delivery between SRC and SRS is though RTC-4.*
*5. The AF may provide the split-rendering information to the Media Session Handler defined by RTC-5, per TS 26.506.*
*6. SRC in the UE discovers the application through RTC-6 and handles the XR runtime.*
*7. The SRC discovers the client media capabilities through the RTC-7 interface.*
*8. The* 5G *Application and AP interact through RTC-8-8.*

Figure 4 shows the Split Rendering Architecture in IBACS (which may evolve) and is described in IBACS PD v0.6.0 as:

### In this architecture:

*a. The Split-Rendering Client (SRC) is responsible on behalf of the UE for negotiations with IMS to find the split-rendering configuration.*
*b. The Split-Rendering Function (SRF) is responsible on behalf of the IMS for negotiations with the UE to find the split-rendering configuration.*
*Note: SRF need to allocate ARMF media resource through DCSF*/*MMTel AS when receiving the split rendering request, to confirm whether there is enough media rendering resource. The above entities use the following interfaces to interact with other entities:*
*1. SR-2 for AR AS and ARMF media delivery.*
*2. SR-4 for SRC and SRF through DCMF*/*MRF for negotiation on split: This interface is used for negotiation at the beginning of the media delivery session and*/*or during the media delivery session to update*/*change the split.*
*3. SR-6 for SRC to interact with the AR Application: This interface is used by the AR Application to request SRC to manage a split and to retrieve the status of the split management.*
*4. SR-7 for SRC to discover the client's capabilities: The device capabilities are retrieved by SRC with this interface. The interface may provide static and dynamic capabilities, i.e. capabilities that do not change or may change during the media delivery* session.]

In a split-rendering paradigm, both the SRS and the SRC may execute a variant of the main loop and render loop illustrated in Figure 2, wherein the SRS and SRC may execute some or all of the operations selectively depending on how the computational operations are split between the SRS and SRC.

Currently, state update solutions are known to exist for multiplayer games where a central server may maintain an authoritative state of the game or parts of it. However, these solutions are proprietary and typically game/game studio specific, do not consider split rendering and may not be usable with split rendering, and also do not leverage 3GPP network technologies.

When split rendering is used to execute a graphics application, state transition trigger inputs may occur at either the SRC or at the SRS. Further, the SRC may need to store at least a part of the application state to enable low perceived latency interactions. For seamless execution of the graphics application and for good quality of experience of users, the application state needs to be synchronized between the SRS and an SRC or between the SRS and all SRCs if multiple SRCs are participating in the same split rendering session.

In the WIs of 3GPP SA4 which consider split rendering, there are no considerations for real-time synchronization of state machines which are not triggered by user inputs or actions. This may result in a fractured application state, causing deterioration of QoE and loss of immersion. In an execution of a shared experience by one SRS and multiple SRCs, a fractured and non-synchronized application state may also impact the co-presence and/or social presence aspects of the experience. There may also arise a need for multiple executions of the same computing tasks related to a particular state transition, once at SRS and once at each SRC participating in the SR session.

### Object of Invention

It is an object of the invention to provide a method and system for state synchronisation of split rendering over a 5G network that will overcome or substantially ameliorate one or more of the disadvantages of the prior art, or to provide a useful alternative.

### Summary of Invention

According to a first aspect of the invention there is provided a method comprising:
registering one or more state transitions in a graphics application being executed during an ongoing split rendering session;
creating a state synchronization message based on the registered state transitions; and
sending the state synchronization message.

According to another aspect of the invention there is provided a method comprising:
registering one or more state transitions in a graphics application being executed during an ongoing split rendering session;
receiving one or more state synchronization messages;
updating the state of the graphics application based on the received one or more state synchronization messages;
creating a state synchronization message based on the registered state transitions and the received one or more state synchronization messages; and
sending the state synchronization message.

According to another aspect of the invention there is provided an apparatus comprising:
means registering one or more state transitions in a graphics application being executed by the apparatus during an ongoing split rendering session;
means for creating a state synchronization message based on the registered state transitions; and
means for sending the state synchronization message.

According to another aspect of the invention there is provided an apparatus comprising:
means for registering one or more state transitions in a graphics application being executed during an ongoing split rendering session;
means for receiving one or more state synchronization messages;
means for updating the state of the graphics application based on the received one or more state synchronization messages
means for creating a state synchronization message based on the registered state transitions and the received one or more state synchronization messages; and
means for sending the state synchronization message.

According to another aspect of the invention there is provided an apparatus comprising:
at least one processor; and
at least one memory storing instructions that, when executed by the at least one processor, cause the apparatus to:
   register one or more state transitions in a graphics application being executed by the apparatus during an ongoing split rendering session;
   create a state synchronisation message based on the registered state transitions; and
send the state synchronisation message.

According to another aspect of the invention there is provided an apparatus comprising:
at least one processor; and
at least one memory storing instructions that, when executed by the at least one processor, cause the apparatus to:
   register one or more state transitions in a graphics application being executed during an ongoing split rendering session;
   receive one or more state synchronization messages;
   update the state of the graphics application based on the received one or more state synchronization messages;
   create a state synchronization message based on the registered state transitions and the received one or more state synchronization messages; and
send the state synchronization message.

It can therefore be seen there is advantageously provided a method of synchronising the application state between the SRS and an SRC or between the SRS and all SRCs if multiple SRCs are participating in the same split rendering session. This improves user QoE of video games and XR applications and minimises latency and fractured application states, for example.

### Brief Description of Drawings

Preferred embodiments of the invention will now be described, by way of example only, with reference to the accompanying drawings in which:
FIG. 1 illustrates two gITF2.0 scene graphs;
FIG. 2 is an example of a main loop and a render loop of a video game according to the prior art;
FIG. 3 shows Split Rendering architecture in SR_MSE according to the prior art;
FIG. 4 shows Split Rendering architecture in IBACS according to the prior art;
FIG. 5 shows a high level flow diagram for split rendering in the 5G network according to an embodiment of the invention;
FIG. 6 is an example of split rendering multiple SRCs according to another embodiment of the invention; and
FIG. 7 is an implementation of split rendering according to another embodiment the invention.

### Description of Embodiments

Generally, the problems described above are mitigated in the preferred embodiments by synchronizing the state between an SRS in the 3GPP (5G) network and one or more SRCs executing a graphics application. The preferred method and system leverage the capabilities of the 5G network and the split rendering technologies to advantageously provide state synchronization means and mechanisms for split rendered graphical applications.

More specifically, preferred embodiments provide means and methods, including signaling, protocol extensions and syntax, for state synchronization of graphics applications and experiences rendered in a split rendering paradigm. This is broadly applicable to split rendering in 3GPP networks. As illustrative examples, two prospective split rendering architectures being developed by 3GPP, especially by SA WG4 are considered for illustrative purposes:
1. 5GS based Split Rendering Media Service Enabler being developed in the SR_MSE WI (Technical Specification (TS) 26.565)
2. IMS based split rendering for AR real time communication being developed in the IBACS WI (Technical Specification (TS) 26.264) based on TS 23.228.

These state synchronization solutions are essential for maintaining quality of user experience (QoE) when rendering operations are de-facto split between an SRS and an SRC, beyond the simple case of remote rendering. Effective de-facto splitting of rendering operations such that the SRC performs rendering of at least some objects in a scene may be advantageous in improving QoE factors like perceived motion-to-render-latency, while simultaneously apportioning rendering resources between the SRS and SRCs.

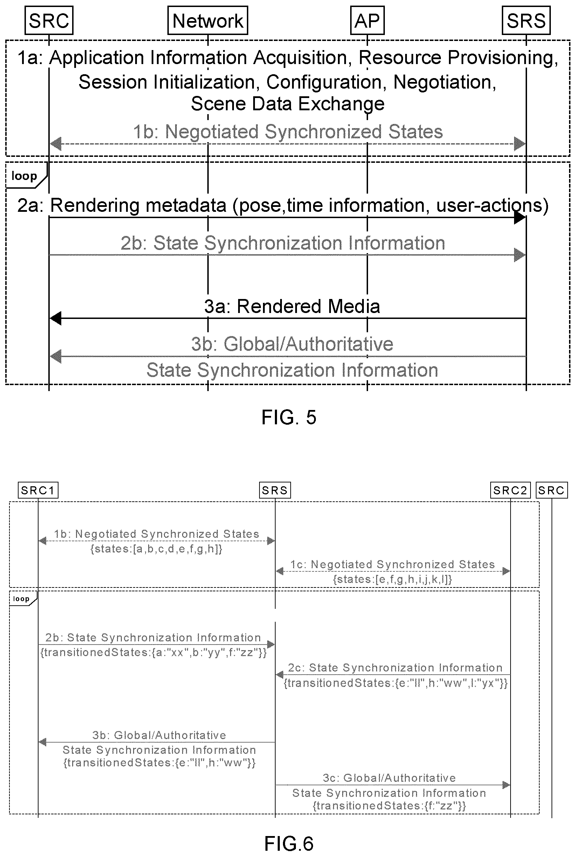

The preferred embodiments of the invention allow standardized interoperable state updates for split rendered applications deployed in 3GPP networks. Among other advantages, this may also enable state updates with lower latency than currently achievable. A high level generic call flow for split rendering with state synchronisation according to an embodiment in the 5G network is illustrated in FIG. 5. In the present specification, the terms "state synchronization message", "state synchronization information", "state synchronization data" may be utilised interchangeably.

Step 1a, may comprise a broad set of tasks including:
(a) Provisioning of split rendering resources in the network. This may be done by, for example, the Application Provider (AP) or functions within the network using appropriate information, such as AP policy, subscription information, PCC rules, QoS KPIs etc.
(b) Application information acquisition by an SRC from an (authorized) AP. This information may, for example, comprise connectivity information of the appropriate resources within the network e.g. URIs of provisioned Application Servers comprising SRSs, IDs of appropriately provisioned IMS based SR/AR Media resource functions.
(c) Scene information exchange between AP, SRC and SRS
(d) Configuration of the split rendering session
(e) Negotiation of meta-data, rendered media and associated formats between the SRS and SRC.
(f) Establishing media and meta-data transport channels.

It will be appreciated that the Split Rendering session set up may differ between implementations, such as those in Work Items SR_MSE and IBACS. For example, a session set up may comprise or more of the above operations in any order.

Step 2a: The SRC sends rendering metadata to the SRS. The rendering metadata may, for example, comprise pose data, time information and user input or action information.

In step 3a: The SRS sends rendered media to SRC, based on at least partially, the rendering meta-data in 2a. The preferred embodiment provides a mechanism to enable state synchronization between the 3D graphics application instances being executed by the SRS and the SRC. An example illustration of some aspects of the of the preferred embodiment for a single SRC is illustrated in green in FIG. 5.

In step 1b, the SRS and SRC may negotiate and agree on the synchronized states i.e. the states to be synchronized. In an example embodiment, these states may comprise states corresponding to a subset of objects in the scene to be rendered in the split rendering session. In an embodiment, the negotiated synchronized may be indicated in a suitably encoded JSON object. In an embodiment, a JSON formatted text in a JSON object may be of the form: 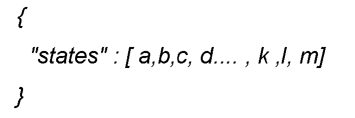 where a,b,c,d...k,l,m are the identifiers of the states to be synchronized, and a,b, c, d...k,l,m may be dictionary objects comprising identifiers of objects in a scene graph as keys and states associated with those objects as values.

In step 2b: The SRC sends state synchronization information to the SRS. In a preferred embodiment, the state synchronization information may comprise only information corresponding to states that have undergone a transition. In an embodiment, the sate synchronization information may comprise suitably encoded JSON object. In some preferred embodiments, a JSON formatted text in the JSON object may be of the form: 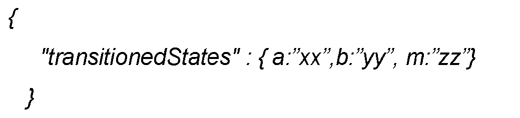 where a, b, m are identifiers of the states that have transitioned and xx, yy and zz indicate the new values of the state after transitions.

In Step 3b, the SRS sends state synchronization information to the SRC. This state synchronization information from SRS may be conceptually considered authoritative as the SRS may be executing a major portion of computations for the graphics application being executed in the split rendering session, thereby affecting and tracking more states than the SRS. Further, shared experiences may be executed in a split rendering paradigm, where in more than one SRC is participating in a split rendering session, the SRS may receive state synchronization information from other SRCs, update its record of the state and send "global" state synchronization information to the SRCs.

In a preferred embodiment, the authoritative or global state synchronization information sent to an SRC comprises information only about states which have transitioned and which belong to the set of agreed upon synchronized states between the SRS and the SRC. In another preferred embodiment, the authoritative or global state synchronization information sent to an SRC comprises information about all states which have transitioned when compared to the last authoritative or global state synchronization information sent by the SRS.

An illustrative example of a preferred embodiment where a shared split rendering session comprises one SRS and two SRCs (SRC1 and SRC2) is shown in FIG. 6. It will be appreciated that although not illustrated in FIG. 6, states may transition at the SRS as well, and the state synchronization information from the SRS to SRC1 and SRC2 may comprise information about those transitions if the affected states belong to the respective synchronization states between SRC1 and the SRS, and SRC2 and SRS.

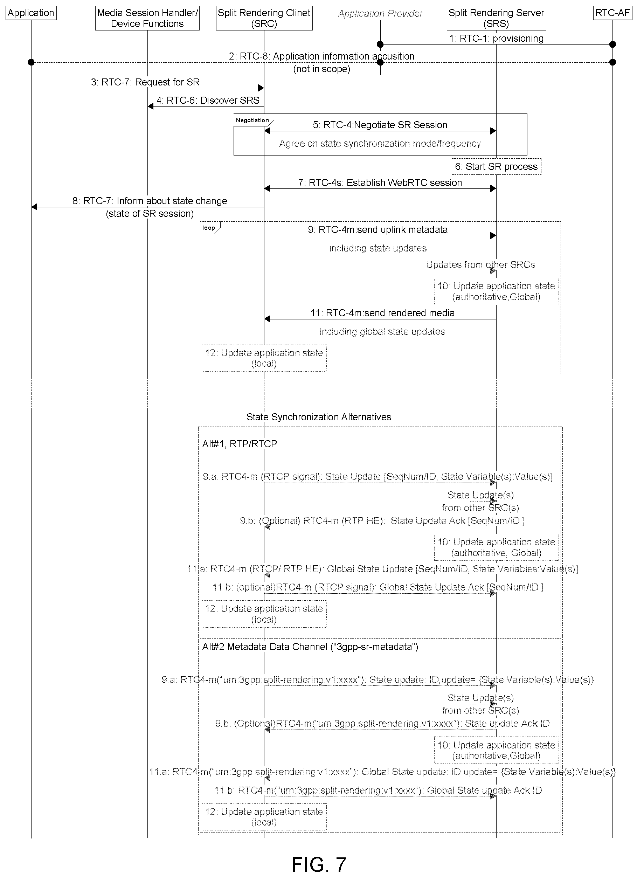

An implementation of a preferred embodiment is shown in FIG. 7 which is based on the high level call flow in Figure 5.2.1.2-1 of TS 26.565 v1 developed in the SR_MSE WI. Aspects of the preferred embodiment are illustrated in green and while this embodiment is illustrated with reference to a particular architecture, it will be appreciated that it is applicable to other split rendering architectures.
1. The Application Service Provider requests the SRF the provisioning a split management session.
2. The split management session is announced to the Application as part of the Service Access Information.
3. The Application requests a split of the client media functions from the SRC.
4. The SRC inquires the Media Session Handler about the client's media capabilities.
5. The SRC and SRS negotiate on the acceptable capabilities for the device and agree on the split option. In an embodiment, the SRS and SRC may negotiate a set of synchronized states, i.e., states to be synchronized, which may be a subset of the states used by the application. In an embodiment, the SRS and SRC may agree on a state synchronization frequency, which may or may not be equal to pose and action data update frequency.
6. The SRS starts the split rendering process.
7. The SRC establishes the WebRTC session.
8. The SRC informs the application that the split-rendering on edge is running (change of state for SR session to running from initializing).
9. The SRC sends uplink metadata, such as pose and action information. In an embodiment, the uplink metadata includes state synchronization information i.e., information about status of synchronized states. In an embodiment, the state synchronization information comprises data about synchronized states that have transitioned.
   In embodiments where multiple SRCs are participating in an SR session with an SRS, the SRS may receive state synchronization information from other SRCs
10. The SRS updates the application state based on state synchronization information received from one or more SRCs and other state transition triggers input during the execution of the main loop.
11. The SRS sends the global state synchronization information to the SRC(s)
12. The SRC(s) update the application state locally based on the update received from the SRS.

It is noted that additional preferred embodiments are illustrated as Alt#1 and Alt#2 in FIG. 6.

In the embodiment of alternative 1 (in band signaling) the step:
9.a The SRC sends uplink state synchronization data. The SRS may receive state synchronization information from other SRCs. In an embodiment, the state synchronization data is sent as application specific RTCP messages compliant with RFC4585. In another embodiment, the state synchronization data is sent in an RTP header extension. In an embodiment, the RTP HE may be a header extension to an RTP packet comprising uplink media, for example for XR applications. In another embodiment, the state synchronization data is sent as an RTCP APP packet compliant with RFC 3550. In another embodiment, the state synchronization data is sent as an RTCP XR packet compliant with RFC 3611.
9.b The SRS may optionally send an acknowledgement of a synchronization data message to the SRC. In an embodiment, the acknowledgement message may be sent in a RTP header extension of an RTP packet. In an embodiment, the RTP HE may be a header extension to an RTP packet comprising rendered media. In another embodiment, the state synchronization data is sent as an RTCP APP packet compliant with RFC 3550. In another embodiment, the state synchronization data is sent as an RTCP XR packet compliant with RFC 3611.
10. The SRS updates the application state based on state synchronization information received from one or more SRCs and other state transition triggers input during the execution of the main loop.
11a. The SRS sends the global state synchronization information to the SRC(s). In an embodiment, the global state synchronization message may be sent in a RTP header extension of an RTP packet. In an embodiment, the RTP HE may be a header extension to an RTP packet comprising rendered media. In another embodiment, the state synchronization data is sent as an RTCP APP packet compliant with RFC 3550. In another embodiment, the state synchronization data is sent as an RTCP XR packet compliant with RFC 3611.
11b. The SRC may optionally send an acknowledgement of a global state synchronization information message to the SRS. In an embodiment, acknowledgement is sent as application specific RTCP messages compliant with RFC4585. In another embodiment, acknowledgement is sent in an RTP header extension. In an embodiment, the RTP HE may be a header extension to an RTP packet comprising uplink media, for example for XR applications. In another embodiment, the state synchronization data is sent as an RTCP APP packet compliant with RFC 3550. In another embodiment, the state synchronization data is sent as an RTCP XR packet compliant with RFC 3611.
12. The SRC(s) update the application state locally based on the update received from the SRS.

In the embodiment of alternative 2 (out of band signaling) the steps become:
9.a The SRC sends uplink, state synchronization data, as a WebRTC data channel message, compliant with RFC8831. The SRS may receive state synchronization information from other SRCs.
9.b The SRS may optionally send an acknowledgement of a synchronization data message to the SRC, as a WebRTC data channel message, compliant with RFC8831.
10. The SRS updates the application state based on state synchronization information received from one or more SRCs and other state transition triggers input during the execution of the main loop.
11a. The SRS sends the global state synchronization information to the SRC(s), as a WebRTC data channel message, compliant with RFC8831.
11b. The SRC may optionally send an acknowledgement of a global state synchronization information message to the SRS as a WebRTC data channel message, compliant with RFC8831.
12. The SRC(s) update the application state locally based on the update received from the SRS.

In a particularly preferred embodiment of the above, the WebRTC data channel message is compliant with metadata message formats defined in TS 26.565 v0.7. In such embodiments, the message type of the data channel message is set to "urn:3gpp:split-rendering:v1:xxxx", where xxxx may be a suitable identifying text string, for example, "state", "stateUpdate" and such.

In some preferred embodiments, a state synchronization message (or acknowledgment thereof) may be sent over an IMS data channel or over an IMS media channel.

In some preferred embodiments, a state synchronization message (or acknowledgment thereof) is sent (in-band ) over a media channel while the corresponding state synchronization message acknowledgment (or state synchronization message) is sent (out of band) over a data channel, for example:
(i) a state synchronization message may be sent over an IMS media channel, and the corresponding acknowledgment may be sent over an IMS data channel and vice-versa; and
(ii) a state synchronization message may be sent over an WebRTC media channel, and the corresponding acknowledgment may be sent over an WebRTC data channel and vice-versa.

In some preferred embodiments, some state synchronization messages may be sent over a media channel while other state synchronization messages may be sent over the data channel.

In some alternatives of the above embodiment, the choice of channel may be based, at least, on the latency requirements of the transitioned states. For example, state transitions due to user interaction or game physics may be signalled over the media channel, while state transitions due to, for example, weather animation may be signalled over the data channel.

In respect of all preferred embodiments, it may be preferred that the state synchronization data may comprise one or more of: an identifier, a timestamp, state value information of one or more states.

For example, in an embodiment of the above preferred embodiment, the identifier may comprise one or more of: information identifying the message, information identifying the message as containing metadata for rendering and information identifying the type of metadata as state synchronization information.

In a preferred embodiment, the state value information comprises a dictionary of key value pairs, wherein the key comprises an identifier of a state and the value comprises one or more of: a value of the state, a state transition input, a time information corresponding to a transition.

In another preferred embodiment, the state value information comprised in a state synchronization is encoded in a compressed manner, using a compression technique, for example, entropy coding techniques like arithmetic coding or Huffman coding or algorithms like Deflate, Run Length Encoding and such.

In some preferred embodiments of the above embodiments, the acknowledgement message may comprise the identifier of a synchronization data message received from the SRC.

In some preferred embodiments, the state synchronization message is sent as a patch scene description object.

In a preferred embodiment, the state synchronization message data comprises data following the format in the table 1 below:

| **Name** | | | **Type** | **Cardinality** | **Description** |
|---|---|---|---|---|---|
| synchronizedStates | | | Object | 1..n | An array of states from the set of states agreed to be synchronized during SR session setup, for which there is a state transition |
| | state | | Object | 1..n | An object that conveys information about the state |
| | | identifier | String/number | 1..1 | A unique identifier of the state |
| | | val | Object/string/number | 1..1 | The current value of the state after a state transition trigger |
| | | lastChangeTime | number | 1..1 | The timestamp of the last transition of this state |

In other embodiments, the information above is transmitted via any other transport protocol (other than what mentioned in the alternatives 1 and 2 (e.g., QUIC, HTTP, etc.).

### List of Abbreviations

AR: Augmented Reality
FSM: Finite State Machine
IMS: IP Multimedia Subsystem
MTSI: Multimedia Telephony Service for IMS
MR: Mixed Reality
QoE: Quality of Experience
SR: Split Rendering
SRS: Split Rendering Server
SRC: Split Rendering Client
UE: User Equipment
VR: Virtual Reality
XR : eXtended Reality

It is noted that while the foregoing describes various preferred embodiments, these should not be read as exhaustive or limiting, and variations and modifications may be made without departing from the scope of the invention.

## Claims

1. A method comprising:
registering one or more state transitions in a graphics application being executed during an ongoing split rendering session;
creating a state synchronization message based on the registered state transitions; and
sending the state synchronization message.

2. A method comprising:
registering one or more state transitions in a graphics application being executed during an ongoing split rendering session;
receiving one or more state synchronization messages;
updating the state of the graphics application based on the received one or more state synchronization messages;
creating a state synchronization message based on the registered one or more state transitions and the received one or more state synchronization messages; and
sending the state synchronization message.

3. An apparatus comprising:
means for registering one or more state transitions in a graphics application being executed by the apparatus during an ongoing split rendering session;
means for creating a state synchronization message based on the registered state transitions; and
means for sending the state synchronization message.

4. The apparatus according to claim 3, further comprising means for negotiating synchronized states during establishment of the split rendering session.

5. The apparatus according to claim 3, further comprising means for sending state synchronization information.

6. The apparatus according to claim 3 or 4, further comprising:
means for registering one or more state transitions in the graphics application in the split rendering session having more than one session participant;
means for receiving state synchronization information from each participant; and
means for updating the state, and sending "global" state synchronization information.

7. The apparatus according to claim 4 further comprising means for negotiating state synchronisation being indicated in a JSON object.

8. The apparatus according to claim 4 further comprising means for sending state information being indicated in a JSON object.

9. The apparatus according to claim 7 or 8 wherein the authoritative or global state synchronization information comprises:
(i) information about states which have transitioned and which belong to the set of agreed upon synchronized states; or
(ii) information about all states which have transitioned when compared to last received authoritative or global state synchronization information.

10. The apparatus according to claim 3 such that when the shared split rendering session comprises a plurality of session participants states transition, and the sent state synchronization information comprises information about those transitions if the affected states belong to the respective negotiated synchronized states.

11. An apparatus comprising:
means for registering one or more state transitions in a graphics application being executed during an ongoing split rendering session;
means for receiving one or more state synchronization messages;
means for updating the state of the graphics application based on the received one or more state synchronization messages
means for creating a state synchronization message based on the registered state transitions and the received one or more state synchronization messages; and
means for sending the state synchronization message.

12. The apparatus according to claim 11, further comprising means for negotiation of acceptable capabilities including a set of synchronized states being states to be synchronized, and a state synchronization frequency, which is or is not equal to pose and action data update frequency.

13. The apparatus according to claim 12 further comprising means for sending uplink metadata and uplink state synchronization data, and means for receiving state synchronization information.

14. The apparatus according to claim 13 further comprising means for sending the state synchronization data: as application specific RTCP messages compliant with RFC4585; in an RTP header extension including an RTP HE being a header extension to an RTP packet comprising uplink media; as an RTCP APP packet compliant with RFC 3550; or as an RTCP XR packet compliant with RFC 3611.

15. The apparatus according to claim 13 further comprising means for sending an acknowledgement of a synchronization data message: in a RTP header extension of an RTP packet including in a RTP HE header extension to an RTP packet comprising rendered media; as an RTCP APP packet compliant with RFC 3550; or as an RTCP XR packet compliant with RFC 3611.
